# EUROPÄISCHE PATENTSCHRIFT

(11) **EP 1 380 928 B1**
(45) Veröffentlichungstag und Bekanntmachung des Hinweises auf die Patenterteilung: **19.11.2014**
(21) Anmeldenummer: 03012738.5
(22) Anmeldetag: 04.06.2003
(51) Int. Cl.: G06F 17/30, G06Q 30/02, G06F 3/033

(54) **Vorrichtung und Verfahren zum Untersuchen von Bildern**
Apparatus and method for analysing images
Dispositif et procédé d'analyse d'images

(30) Priorität: 05.06.2002 DE 10224948
(43) Veröffentlichungstag der Anmeldung: 14.01.2004
(73) Patentinhaber: Scheier, Christian, Dr., 20095 Hamburg (DE); Egner, Steffen, Dr., 20095 Hamburg (DE)
(72) Erfinder: Scheier, Christian, Dr., 20095 Hamburg (DE); Egner, Steffen, Dr., 20095 Hamburg (DE)
(74) Vertreter: Glawe, Delfs, Moll

(56) Entgegenhaltungen:
- EP-A- 0 816 983
- EP-A2- 0 602 956
- EP-A2- 0 955 599
- EP-A2- 0 967 560
- WO-A1-99/12291
- DE-A1- 10 049 825
- US-A- 5 694 150
- US-A1- 2001 048 439
- US-A1- 2002 054 082
- US-B1- 6 396 941
- 'Auge um auge/multimedia-nutzung im blickpunkt der forscher' NEUE ZUERICHER ZEITUNG 13 Oktober 2000, Seite S81, XP001167388

## Beschreibung

Die Erfindung betrifft eine Vorrichtung zum Untersuchen von Bildern mit einer Bildspeichereinrichtung, die zum Speichern von Bilddaten eines oder mehrerer auszuwertender Bilder ausgebildet ist, einer Anzeigeeinrichtung, die zum Darstellen der Bilddaten ausgebildet ist, einer Eingabeeinrichtung für einen Probanden, die ein Zeigegerät aufweist, einer Steuereinrichtung, welche die vorgenannten Einrichtungen miteinander verbindet, einen Ereignisdetektor, der Positionsdaten bei Auftreten eines bestimmten Ereignisses erfasst, und einer Datenabgleicheinrichtung zum Abgleichen von Bilddaten und Betrachtungsdaten. Sie betrifft ferner ein Verfahren zum Untersuchen von Bildern mit den Schritten Speichern von Bilddaten eines oder mehrerer zu untersuchender Bilder in einer Speichereinrichtung, Anzeigen des Bildes, Bestimmen von Positionen einer bewegten Zeigeeinrichtung und Abfragen eines Ereignisdetektors.

In dem Bereich der Medienwirtschaft, insbesondere der Werbung, ist es von Bedeutung zu wissen, wie Bildmaterial von Probanden wahrgenommen wird und welche Wirkung es auf die Betrachter ausübt. Mit solchen Kenntnissen können Stärken und Schwächen des Bildmaterials erkannt werden. Dies dient vornehmlich dazu, das Bildmaterial hinsichtlich seiner Wirkung zu optimieren und Fehler zu vermeiden. Aus offenkundiger Vorbenutzung ist es bekannt, das zu bewertende Bildmaterial einer bestimmten Gruppe von Probanden vorzuführen und sie danach zu befragen. Dies geschieht häufig mit Fragebögen, die von den Probanden beantwortet werden müssen, nachdem sie das zu bewertende Bildmaterial gesehen haben. Dieses bekannte Verfahren ist aufwendig und umständlich. Außerdem läßt die Qualität der Ergebnisse häufig zu wünschen übrig, da das Beantworten des Fragebogens aus praktischen Gründen erst erfolgen kann, nachdem das Bildmaterial gezeigt worden ist. Die Probanden geben ihre Antworten also erst im nachhinein. Spontane Eindrücke und Gefühlsregungen werden dadurch häufig nicht korrekt wiedergegeben. Ein weiterer Nachteil ist, daß die Antworten nur indirekt sind. Denn der Proband muß zuerst seine visuellen Eindrücke in verbale Form fassen, bevor er die gestellten Fragen beantworten kann. Viele emotional tiefgehende Eindrücke lassen sich aber nur schwer in Worte fassen, vor allem bei sprachlich weniger geübten Probanden. Daraus sich daraus ergebenden Ungenauigkeiten können zu erheblichen Verzerrungen des Ergebnisses führen. Um diesen Nachteil zu vermeiden sind direkte Verfahren entwickelt worden. Unter direkt wird hierbei verstanden, daß der Proband nicht mehr seine visuellen Eindrücke in verbale Form zu fassen braucht. Statt dessen wird seine Reaktion unmittelbar gemessen. Da die Gedanken eines Menschen einer direkt Messung nicht zugänglich sind, wird ein Hilfsparameter benutzt. Es ist bekannt (EP-A-0 816 983), Augenbewegungen zu erfassen und daraus einen Rückschluß zu ziehen, welche Bereiche des Bildmaterials besonders beachtet werden. Aus offenkundiger Vorbenutzung sind dazu Vorrichtungen bekannt, die mit einer Kamera zur Messung von Augenbewegungen versehen sind. In der Regel ist dazu die Kamera an einem Kopftragegestell angeordnet, der dem Probanden aufgesetzt wird. Auf diese Weise wird ein direkteres Ergebnis als bei Befragungen erzielt. Insbesondere können spontane und vor allem auch unbewußte Reaktionen ermittelt werden. Ein schwerwiegender Nachteil besteht jedoch darin, daß die zur Messung der Augenbewegung erforderliche Ausrüstung sehr speziell ist. Anschaffung und Betrieb verlangen daher viel Aufwand. In der Regel können derartige Bewertungen von Bildmaterial daher nur von spezialisierten Einrichtungen vorgenommen werden.

Zum Extrahieren von Text aus Webseiten ist es bekannt, anhand von charakteristischen Mausaktionen zu bestimmen, welche Testinhalte einer Webseite ein Benutzer liest (US 2001/016840 A1). Vorgesehen ist eine vergrößerte Darstellung des mit der Maus angesteuerten Bereichs. Der Benutzer verändert mit seiner Interaktion also die Darstellung der Webseite. Das Zeigegerät fungiert hierbei als Selektionswerkzeug. Dieses System ist zur Aufzeichnung der realen Benutzung einer Webseite geeignet.

Ferner ist ein Verfahren zum Auswerten von Kunden-Eingaben an Kunden-Rechnern bekannt, wobei die Auswertung in einem zentralen Rechner erfolgt (DE 100 49 825 A1). Es wird ausgewertet, wie die Kunden ihre Rechnermaus auf einer Angebotsseite führen, insbesondere werden die dafür nötigen Zeitdauern.und Pausenzeiten zwischen Bedienhandlungen erfaßt. Daraus kann ein Maß für eine Unsicherheit des Kunden und das Risiko eines Verlassens der Angebotsseite gewonnen werden.

Aus einem wissenschaftlichen Artikel ist bekannt, dass bei der Bilduntersuchung grundsätzlich eine hohe Übereinstimmung bei der Nutzung von Blick- und Mausdaten besteht (S. Egner et al.: "Comparing attention models with different types of behaviour", Investigative Ophtalmology & Visual Service, Jahrgang 2000, Vol. 41, No 4, Seite 39). Es wird vorgeschlagen, die Verwendung der Mausdatenerfassung weiter zu erproben. Bei einer empirischen Studie wurden dazu Mausbewegungen aufgezeichnet (M. Chen et al.: "What can a mouse cursor tell us more?", Conference on human Factors in Computing Systems 2001, Seite 281). Es bestätigte sich, dass eine hohe Übereinstimmung besteht.

Praktisch ausgeführte Methoden zur Analyse der Benutzung von Webseiten unter Verwendung von Computermäusen anstatt Augenkameras sind Gegenstand eines Artikels (B. Wyss: "Auge um Auge", Neue Zürcher Zeitung, 13. Oktober 2000, Nr. 239, S. 81). Es ist beschrieben, dass außer der reinen Mausbewegung auch ein Mausklick als Ereignis erfasst wird.

Der Erfindung liegt die Aufgabe zugrunde, ausgehend von dem zuletzt genannten Stand der Technik die Anwendbarkeit, insbesondere die Aussagekraft und die Reproduzierbarkeit der Ergebnisse, zu erhöhen.

Die erfindungsgemäße Lösung liegt in einer Vorrichtung und einem Verfahren mit den Merkmalen der unabhängigen Ansprüche. Vorteilhafte Weiterbildungen ergeben sich aus den abhängigen Ansprüchen.

Erfindungsgemäß ist bei einer Vorrichtung zum Untersuchen von Bildern umfassend grafische und/oder Text-Inhalte mit einer Bildspeichereinrichtung, die zum Speichern von Bilddaten eines oder mehrerer auszuwertender Bilder ausgebildet ist, einer Anzeigeeinrichtung, die zum Darstellen der Bilddaten ausgebildet ist, einer Eingabeeinrichtung für einen Probanden, die ein Zeigegerät aufweist, wobei das Zeigegerät so ausgebildet ist, dass es von dem Probanden manuell zum Zeigen bewegt wird, und die Eingabeeinrichtung interaktiv mit einer Markierung derart zusammenwirkt, dass die Position des Zeigegeräts mittels der Markierung auf der Anzeigeeinrichtung dargestellt wird, einer Steuereinrichtung, welche die vorgenannten Einrichtungen miteinander verbindet und mittels einer Steuerdatei eine Darstellung der zu untersuchenden Bilder als eine in Reihenfolge und Zeit bestimmte Bildfolge auf der Anzeigeeinrichtung bewirkt, einem Ereignisdetektor, der dazu ausgebildet ist, die Positionsdaten bei Auftreten eines bestimmten Ereignisses zu erfassen und eine Ereignisdatei zu bilden, sowie einer Datenabgleicheinrichtung zum Abgleichen von Bilddaten und Betrachtungsdaten vorgesehen, dass der Ereignisdetektor weiter so ausgebildet ist, dass für einen Bilderwechsel ein eigener Datensatz erzeugt und ein Nullzeitpunkt bestimmt wird, wobei die Ereignisdatei gebildet ist aus Datensätzen, die Daten zum Zeitpunkt, zur Position und zum Bild umfassen, die Datenabgleicheinrichtung ein Synchronisiermodul aufweist, das die Steuerdatei mit der Ereignisdatei synchronisiert, und eine Zeitmesseinrichtung vorgesehen ist, die mit einer Auswerteeinrichtung zusammenwirkt, welche ausgebildet ist zum Errechnen eines zeitabhängigen Betrachtungsverlaufs aus Datensätzen und Bestimmung der Häufigkeit der Ereignisse, die der Ereignisdetektor als Betätigen einer Taste des Zeigegeräts ermittelt hat, über der Zeit, und die Auswerteeinrichtung weiter ein Bildklassifikationsmodul aufweist, das so ausgebildet ist, um die Bilddaten automatisch gestützt auf das Ausgangsbild unter Berücksichtigung der vom Zeigegerät gewonnenen Daten in Objekte zu klassifizieren.

Nachfolgend seien zuerst einige verwendete Begriffe erläutert:

Unter Bild wird all das verstanden, was sich grafisch auf einer umgrenzten Fläche darstellen läßt. Es brauchen aber nicht unbedingt nur grafische Inhalte dargestellt werden, der Begriff Bilder umfaßt auch solche Darstellungen, die zu einem wesentlichen Teil oder ganz aus Text bestehen. Als Bilder werden sowohl statische Einzelbilder wie auch dynamische Bildfolgen verstanden. Letzteres kann wiederum eine Sequenz von Bildern, die jeweils einzeln wahrgenommen werden, wie bei einer Diavorführung, oder es kann sich um Laufbilder oder um eine Kombination aus beidem handeln. Die Bilder brauchen nicht von einer Kamera aufgenommen worden zu sein, es kann sich auch um Darstellungen von Computer-Desktops oder von Web-Seiten handeln.

Unter interaktiv wird hierbei verstanden, daß dem Probanden zumindest eine optische Anzeige dafür geboten ist, wohin er mit dem Zeigegerät gerade zielt.

Das Zeigegerät ist mit einem Sensor zur Bestimmung seiner Position versehen. Die von dem Sensor ermittelten Positionsdaten werden an die Eingabeeinrichtung übertragen.

Unter einem Betrachtungsverlauf wird eine Folge von Aufmerksamkeitspunkten verstanden. Ein Aufmerksamkeitspunkt ist die Stelle auf einem von der Anzeigeeinrichtung dargestellten Bild, welche zu einem Zeitpunkt im Zentrum der Aufmerksamkeit des Probanden liegt.

Unter manuell bewegt wird verstanden, daß der Proband das Zeigegerät selber aktiv bewegt. Üblicherweise wird der Proband das Zeigegerät mit der Hand bewegen, jedoch soll nicht ausgeschlossen werden, daß andere Gliedmaßen (z. B. Füße) dazu verwendet werden.

Der Kern der Erfindung liegt darin, ein von dem Probanden bewegtes Zeigegerät zu verwenden und weiter mit dem Ereignisdetektor Zusatzinformationen zu gewinnen, welche ein Ereignis ("Klicken mit der Maustaste") beinhalten, wobei mit einem Zeitglied die Häufigkeit der Ereignisse über der Zeit bestimmt wird. Es hat sich gezeigt, daß es nicht nur auf unwillkürliche Bewegungen zu dem jeweiligen Aufmerksamkeitspunkt ankommt, sondern auch auf die Häufigkeit, mit der der Proband in einer gewissen Zeit beim Betrachten "klickt". Die Probanden unterliegen sozusagen einem inneren Drang, wobei mittels der nachgeschalteten Verarbeitung ereignisbasierte Zusatzinformationen gewonnen werden, mit denen die Untersuchung des Bildmaterials verfeinert wird. Mittels eines Zeitglieds wird die Häufigkeit der Ereignisse über der Zeit bestimmt. Die Erfindung beruht auf dem Gedanken, diesen inneren Drang von außen wahrnehmbar und damit meßbar zu machen, indem der zeitabhängige Betrachtungsverlauf und die Häufigkeit der Klick-Ereignisse über der Zeit bestimmt werden. Ferner wird eine automatische Bildklassifikation erreicht, die gestützt auf das Ausgangsbild unter Berücksichtigung der ermittelten Zeigedaten bei der Auswertung die Bilddaten in Objekte klassifiziert.

Die Erfindung hat ferner erkannt, daß diese unwillkürlichen Bewegungen dadurch zielgerichtet (zum Aufmerksamkeitspunkt hin) erfolgen und damit für eine Auswertung nutzbar gemacht werden können, daß auf der Anzeigeeinrichtung eine Markierung an der Stelle angezeigt wird, auf die der Proband mit dem Zeigegerät gerade zeigt. Dadurch ergibt sich eine Rückkoppelung, die dazu führt, daß der Proband das Zeigegerät genauer auf den von ihm am meisten beachteten Bildbereich ausrichtet. Dadurch wird die Genauigkeit für die Bestimmung des Aufmerksamkeitspunkts erhöht. Denn es hat sich gezeigt, daß der Proband versucht, die Markierung zu dem Aufmerksamkeitspunkt zu bewegen. Dies kann unwillkürlich geschehen oder es kann ein entsprechendes Training vorher durchgeführt worden sein.

Ein Vorteil besteht darin, daß die Ergebnisse genauer sind. Insgesamt ermöglicht es die Erfindung, Bildmaterial mit wesentlich weniger Aufwand und größerer Genauigkeit und Robustheit zu untersuchen. Dadurch kann Bildmaterial in hocheffizienter Weise auf Kundenwirkung untersucht und bewertet werden. Dank der durch die Erfindung ermöglichten Einfachheit und Schnelligkeit können Untersuchungen bereits dann durchgeführt werden, wenn das Bildmaterial noch im Entwurfsstadium ist. Mit den herkömmlichen Verfahren und Vorrichtungen war dies wegen zu hohen finanziellen Aufwands und/oder zu großem Zeitverlust nicht möglich. Mit der Erfindung wird es so ermöglicht, Schwachpunkte bereits früh zu erkennen und sie so zu beheben. Die Erfindung erschließt damit neue Anwendungsgebiete, in denen herkömmlicherweise aus Kosten- oder Zeitgründen keine Untersuchungen vorgenommen wurden. So kann dank der Erfindung auch Bildmaterial in schnellebigen Bereichen, z. B. Webseiten, untersucht werden.

Zweckmäßigerweise ist das Zeigegerät als eine Computer-Maus ausgeführt. Computer-Mäuse sind in verschiedenen Ausführungen kostengünstig verfügbar und ihre Bedienung ist weiten Probandengruppen bestens vertraut. Überdies sind sie heute an nahezu allen Computern verfügbar, so daß für sie keine zusätzlichen Kosten aufgewendet zu werden brauchen.

Das Zeigegerät kann auch als ein Lichtgriffel oder insbesondere auch als ein Laserpointer ausgebildet sein. Letztere bietet den Vorteil, daß die momentane Ausrichtung des Laserpointer durch den Lichtpunkt auch dann noch angezeigt wird, wenn der Laserpointer gar nicht mehr auf die Anzeigeeinrichtung weist. Dies ist insbesondere von Vorteil beim Auffinden und Erkennen von krassen Fehlausrichtungen. Darüber hinaus hat sich gezeigt, daß gerade bei Lichtpunkten von Laserpointern der Drang, ihn zu dem Aufmerksamkeitspunkt zu bewegen, besonders groß ist. Es versteht sich, daß das Zeigegerät auch anders ausgeführt sein kann, beispielsweise als Stylo oder auch als Touchscreen.

Vorzugsweise ist nicht nur ein Zeigegerät für einen Probanden, sondern es sind mehrere für eine Mehrzahl von Probanden vorgesehen. Es versteht sich, daß auch die Anzeigeeinrichtung mehrfach vorgesehen sein müssen, sofern sich nicht mehrere Probanden eine Anzeigeeinrichtung teilen können. Damit können zeitgleich Untersuchungsdaten von mehreren Probanden aufgenommen werden. Dadurch können in kürzester Zeit umfangreiche Untersuchungen auf einer breiten Basis mit vielen Probanden durchgeführt werden. Dabei brauchen die Probanden nicht alle in einem Raum zu sein, sondern sie können sich an verschiedenen Orten befinden. Mit der herkömmlichen Vorrichtung war dies praktisch nicht möglich, da dann auch noch Spezialisten an dem Ort erforderlich wären, an dem sich die Eingabeeinrichtung befindet. Dadurch konnten Untersuchungen an einer Vielzahl von Probanden gleichzeitig nicht durchgeführt werden. Damit ermöglicht die Erfindung auch bei größeren Probandenzahlen eine schnellere Untersuchung.

Bei einer vorteilhaften Ausführungsform ist die Eingabeeinrichtung mit dem Zeigegerät räumlich getrennt von der Auswerteeinrichtung angeordnet, wobei sie über ein Datennetz, insbesondere ein LAN oder ein WAN miteinander verbunden sind. Unter einem LAN wird ein "local area network" verstanden, bei dem die jeweiligen angeschlossenen Einrichtungen in dem selben oder in einem benachbarten Gebäude angeordnet sind. Ein Beispiel für ein LAN ist Ethernet oder Firewire. Unter einem WAN wird ein "wide area network" verstanden, bei dem die jeweils angeschlossenen Einrichtungen beliebig weit auseinander angeordnet sein können, etwa in einer anderen Stadt, einem anderen Land oder einem anderen Erdteil. Ein Beispiel für ein WAN ist das Internet. Die räumliche Trennung von Erfassung des Probandenverhaltens und Auswertung ermöglicht es, das Bildmaterial dezentral zu untersuchen. Dies hat den Vorteil, daß die Probanden nicht in ein spezielles Labor zu kommen brauchen, sondern sich an einem beliebigen anderen Ort, z. B. bei sich zu Hause, aufhalten können. Damit werden Verfälschungen, wie sie durch eine nicht vertraute Umgebung entstehen können, wirkungsvoll vermieden. Dazu sind die Eingabeeinrichtungen und Auswerteeinrichtung mit Netzwerkschnittstellen versehen.

Besonders vorteilhaft ist es, wenn der Ereignisdetektor vorgesehen ist, der dazu ausgebildet ist, Positionsdaten beim Auftreten eines bestimmten Ereignisses auszuwerten, so daß die Positionsdaten nicht laufend erfaßt und verarbeitet zu werden brauchen, sondern nur dann, wenn bestimmte Ereignisse auftreten. Ein solches Ereignis ist zum Beispiel das Betätigen einer Maustaste ("Klicken"). Mit diesem Ereignisdetektor kann so das Datenvolumen gegenüber einer kontinuierlichen Erfassung verringert werden. Zusätzlich kann ein Maß für die Bedeutung generiert werden, die der gerade betrachtete Bildbereich für den Probanden hat.

Der Ereignisdetektor braucht aber nicht unbedingt so ausgebildet zu sein, daß nur ein aktives Tun des Probanden ein Ereignis darstellt. Er kann genausogut auch so ausgebildet sein, daß ein Nichtstun des Probanden ein Ereignis darstellt. So kann als zu detektierendes Ereignis sowohl das Betätigen einer Taste ("Klicken") vorgesehen sein, es kann aber auch statt dessen das Stoppen der Bewegung des Zeigegeräts durch den Probanden das zu detektierende Ereignis sein. In diesem Fall mißt der Ereignisdetektor die Bewegungsgeschwindigkeit des Zeigegeräts und löst mittels eines Schwellwertdetektors aus, wenn eine bestimmte Geschwindigkeit unterschritten ist.

Der Ereignisdetektor kann auch weitere Ereignisse erfassen, z. B. einen Wechsel des angezeigten Bildes bei Bildfolgen. Dies erleichtert bei der Auswertung eine Synchronisierung der angezeigten Bilddaten und der erfaßten Positionsdaten.

Gemäß einem weiteren Aspekt der Erfindung, der gegebenenfalls unabhängigen Schutz verdient, ist eine Umsetzeinrichtung vorgesehen, die dazu ausgebildet ist, von dem Zeigegerät ausgegebene Positionsdaten in ein geräteunabhängiges Datenformat umzuwandeln. Dies hat den Vorteil, daß die weitere Verarbeitung der Positionsdaten unabhängig von dem verwendeten Zeigegerät erfolgen kann. Dadurch können verschiedene, an den jeweiligen Zweck angepaßte Zeigegeräte verwendet werden, ohne daß sich deshalb das Datenformat ändert und ohne daß aufwendige Anpassungen bei der nachfolgenden Verarbeitung der Daten erforderlich werden. Die Umsetzeinrichtung ist dazu so ausgebildet, daß sie die Meßdaten des Zeigegeräts aus dem Koordinatensystem des Zeigegeräts in ein geräteunabhängiges Koordinatensystem umrechnet. Mit einem geräteunabhängigen Datenformat können unterschiedliche Zeigegeräte für unterschiedlichste Bildmaterialien verwendet werden. Darüber hinaus hat ein geräteunabhängiges Datenformat den Vorteil, daß die Vergleichbarkeit von Untersuchungen verbessert ist. So ist es zum Beispiel leicht möglich, dasselbe Bildmaterial zweimal mit verschiedenen Zeigegeräten zu untersuchen. Bei gerätespezifischen Daten sind die Vergleichsmöglichkeiten stark eingeschränkt und auf der Ebene der Meßdaten unmöglich. Demgegenüber können mit einem geräteunabhängigen Datenformat Vergleiche noch auf der Ebene der gemessenen Positionsdaten, also ohne dazwischen liegende Verarbeitung, vorgenommen werden. Dadurch können auf einfache Weise mehrere Untersuchungen desselben Bildmaterials mit unterschiedlichen Zeigegeräten durchgeführt werden. Dadurch können Beeinflussungen durch die unterschiedlichen Zeigegeräte leicht erkannt und gewünschtenfalls korrigiert werden.

Zweckmäßigerweise ist die Umsetzeinrichtung dem Ereignisdetektor vorgeschaltet. Dadurch können dem Ereignisdetektor bereits geräteunabhängigen Daten zugeführt werden. Das hat den Vorteil, daß der Ereignisdetektor nicht bei jedem Wechsel des Zeigegeräts angepaßt zu werden braucht.

Ein entsprechendes Verfahren zur Untersuchung von Bilddaten ist Gegenstand des unabhängigen Verfahrensanspruchs. Vorteilhafte Weiterbildungen des Verfahrens sind in den abhängigen Verfahrensansprüchen angegeben. Die Erfindung bezieht sich ferner auf ein entsprechendes Computerprogrammprodukt.

Die Erfindung wird nachfolgend unter Bezugnahme auf die Zeichnung an Hand eines vorteilhaften Ausführungsbeispiels erläutert. Es zeigen:
- Fig. 1: eine schematische Ansicht einer erfindungsgemäßen Vorrichtung;
- Fig. 2: eine schematische Ansicht eines Ablaufplans des entsprechenden erfindungsgemäßen Verfahrens;
- Fig. 3: ein Beispiel für eine untersuchtes Bild;
- Fig. 4: ein Beispiel für ein Resultat einer Auswertung; und
- Fig. 5: ein weiteres Beispiel für ein Resultat einer Auswertung.

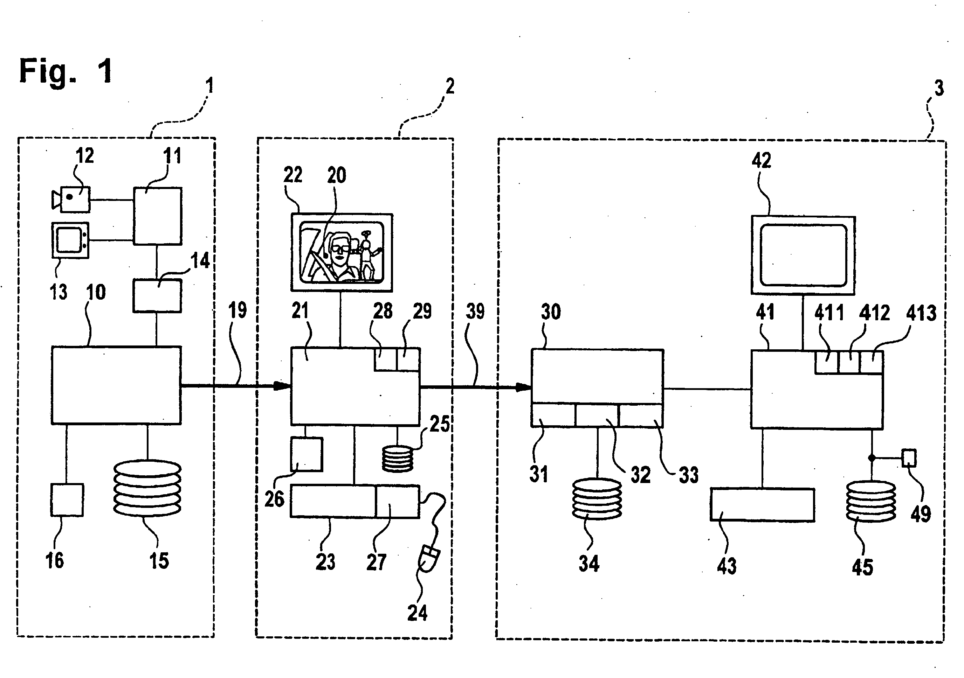

In Fig. 1 ist ein Ausführungsbeispiel für eine erfindungsgemäße Vorrichtung dargestellt. Die Hauptbestandteile der Vorrichtung sind ein Testdesignmodul 1, ein Probandenmodul 2 und ein Auswertemodul 3. Das Testdesignmodul 1 umfaßt eine Speichereinrichtung 10 und Einrichtungen zur Erstellung von Tests aus zu untersuchendem Bildmaterial. Das Probandenmodul 2 umfaßt eine Steuereinrichtung 21, eine Anzeigeeinrichtung 22, eine Eingabeeinrichtung 23 mit einem Zeigegerät 24. Es ist über vorzugsweise unidirektionale Steuer- und Datenleitungen 29, 39 mit dem Testdesignmodul 1 und dem Auswertemodul 3 verbunden. Das Auswertemodul 3 umfaßt eine Datenabgleicheinrichtung 30 und eine Auswerteeinrichtung 41 mit einer Anzeigeeinrichtung 42 und einer Eingabeeinrichtung 43. Zweckmäßigerweise sind die vorgenannten Module jeweils von einem Personal-Computer gebildet; es können auch mehrere Module in einem Personal-Computer vereinigt sein.

In dem Testdesignmodul 1 sind Bilddaten von zu untersuchenden Bildern in Form digitalisierter Bilddaten gespeichert. Um aus Bildern die benötigten Bilddaten zu erhalten, ist eine Bildgewinnungseinrichtung 11-13 vorgesehen. Sie ist dazu ausgebildet, eine externe und eine interne Bildgewinnung auszuführen. Für die externe Bildgewinnung ist in dem dargestellten Ausführungsbeispiel eine Kamera 12 vorgesehen, mit der die zu untersuchenden Bilder aufgenommen werden können und als digitalisierte Bilddaten einer Auswahleinheit 11 zugeführt werden. Anstelle der Kamera kann auch ein Scanner vorgesehen sein, um das zu untersuchende Bildmaterial einzuscannen. Alternativ zu der externen Bildgewinnung ist eine interne Bildgewinnung vorgesehen. Bei der internen Bildgewinnung wird das abgetastet, was auf einer Anzeigeeinrichtung 13 dargestellt ist. Es wird sozusagen der Bildschirminhalt der Anzeigeeinrichtung 13 auf digitalem Weg "abfotografiert. Damit stehen - wie bei der externen Bildgewinnung - digitalisierte Bilddaten zur Verfügung. Unabhängig von der Art der Bildgewinnung werden die Bilddaten über die Auswahleinheit 11 für eine spätere Darstellung auf dem Probandenmodul 2 aufbereitet und in der Speichereinrichtung 10 abgespeichert.

Das Aufbereiten umfaßt insbesondere das Bestimmen der Darstellungsreihenfolge einer aus mehreren Bildern bestehenden Bildfolge und das Festlegen, wie lange jedes der Bilder angezeigt werden soll. Dazu weist die Auswahleinheit 11 folgende Funktionen auf: sie ermöglicht eine flexible Bildnavigation und eine Darstellung der Bilder in verschiedenen Auflösungen, ferner eine Benennung der Bilder, eine Festlegung der Anzeigedauer sowie der Reihenfolge der einzelnen Bilder und schließlich das Hinzufügen und Entfernen von Bildern. Die für diese Funktionen jeweils relevanten Parameter werden in einer Steuerdatei gespeichert. Die Steuerdatei enthält die für das Darstellen und Weiterschalten der Bildfolge relevanten Parameter, insbesondere die Darstellungsdauer jeden Bildes, die Abspielgeschwindigkeit der Bildfolge ausgedrückt als Frame-Rate sowie Angaben über die Art der Bildübergänge, z. B. nach Zeit, nach Probandeneingabe mit dem Zeigegerät 24 oder auf andere Weise. Die Steuerdatei enthält auch Informationen darüber, welche Art von Probanden-Interaktionen später beim Untersuchen erlaubt ist. Zwischen der Auswahleinheit 11 und der Speichereinrichtung 10 ist eine Transcodereinheit 14 angeordnet. Sie dient dazu, aus der mit der Auswahleinheit 11 erstellten Bildfolge einen Film zu generieren. Zweckmäßigerweise wird dazu die Bildfolge in ein komprimiertes Datenformat gewandelt. Der Film enthält sowohl die komprimierte Bildfolge wie auch die Steuerdatei.

Die Speichereinrichtung 10 dient zum Speichern der Bilddaten der zu untersuchenden Bilder. Ferner ist der mit der Auswahleinheit 11 und der Transcodereinheit 13 erzeugte Film in der Speichereinrichtung 10 gespeichert. Die Speichereinrichtung 10 weist dazu einen Massenspeicher auf, der zweckmäßigerweise als Festplatte 15 realisiert ist. Zusätzlich ist ein schneller Halbleiterspeicher 16 vorgesehen, in den die anzuzeigenden Bilddaten geladen werden. Dadurch kann eine zeitgenaue Darstellung der einzelnen Bilder gemäß der in dem Film festgelegten Abfolge erzielt werden.

Bei dem Probandenmodul 2 dient die Anzeigeeinrichtung 22 dazu, den Film mit den zu untersuchenden Bildern zur Betrachtung durch den Probanden anzuzeigen. Die Anzeigeeinrichtung 22 ist so beschaffen, daß sie die Bilder mit der erforderlichen Auflösung und Farbtiefe darstellen kann. Dazu ist sie mit einem Bildspeicher 26 versehen. Der Bildspeicher 26 muß ausreichend großem und hinreichend schnell sein, um die darzustellenden Bilder exakt zeitlich exakt zu dem festgelegten Zeitpunkt anzeigen zu können. Als Anzeigeeinrichtung 22 kann ein herkömmlicher Computermonitor, sei es als Röhrenmonitor oder TFT-Display, verwendet werden. Es kann aber auch ein eigenständiges Gerät, wie ein kleiner Mobilcomputer (PDA = Personal Digital Assistant) oder ein Laptop, verwendet werden, sofern dessen Display ausreichend leistungsfähig ist. Ferner können Projektoren (Beamer) oder auch Touchscreens verwendet werden.

Zum Abspielen der in der Speichereinrichtung 10 gespeicherten Bilddaten in der festgelegten Abfolge ist die Steuereinrichtung 21 vorgesehen. Die Steuereinrichtung 21 sorgt dafür, daß die Bilddaten der anzuzeigenden Bilder aus der Speichereinrichtung 10 ausgelesen und in den Bildspeicher 26 des Probandenmoduls 2 geschrieben werden. Vorzugsweise ist die Steuereinrichtung 21 so ausgeführt, daß sie die Bilddaten mit einem gewissen zeitlichen Vorlauf in dem Bildspeicher 26 bereitstellt. Dadurch können Störungen, insbesondere Bildaussetzer oder Ruckein, durch Lesefehler oder Überlastung der Speichereinrichtung 10 weitgehend vermieden werden. Die Steuereinrichtung 21 dient ferner dazu, die Bilddaten an den Typ der jeweils verwendeten Anzeigeeinrichtung 22 anzupassen. Sie transformiert dazu die in geräteunspezifischem Format gespeicherten Bilddaten in ein für die Anzeigeeinrichtung 22 spezifisches Format. Dieses Transformieren umfaßt insbesondere ein Umwandeln des geräteunspezifischen Koordinatensystems der in der Speichereinrichtung 10 gespeicherten Bilddaten in das spezifische Koordinatensystem der verwendeten Anzeigeeinrichtung 22. Dieses auch als "Mappen" bezeichnete Umwandeln garantiert eine standardisierte Bilddarstellung auch auf unterschiedlichen Anzeigeinrichtungen 22.

Die Eingabeeinrichtung 23 dient zum einen zum Eingeben von Daten und zum anderen zum Anschluß des Zeigegeräts 24. Die Position des Zeigegeräts 24 wird von der Eingabeeinrichtung 23 auf der Anzeigeeinrichtung 22 dargestellt, indem eine Markierung 20 an der entsprechenden Stelle gezeigt wird. Dazu verwendet die Anzeigeeinrichtung 22 ein eigenes, erstes Koordinatensystem. Das Zeigegerät 24 dient als Instrument bei der Untersuchung der Bilder durch den Probanden. Der Proband hält das Zeigegerät 24 in der Hand, während ihm die Bilder in der im Film bestimmten Folge auf der Anzeigeeinrichtung 22 dargestellt werden. Außerdem wird die Markierung 20 dargestellt, und zwar an der Stelle, die durch die aktuelle Position des Zeigegeräts 24 bestimmt ist. Bewegt der Proband das Zeigegerät 24, so wird durch die Steuereinrichtung 21 in interaktiver Weise die Markierung 20 entsprechend der Bewegung des zeigegeräts 24 verschoben. Der Proband wird dann beim Betrachten der Bilder unwillkürlich versuchen, das Zeigegerät 24 so zu bewegen, daß die Markierung 20 auf den Bereich des angezeigten Bilds zeigt, dem der Proband gerade primär seine Aufmerksamkeit zuwendet. Die von dem Zeigegerät 24 bei seiner Bewegung ausgegebenen Positionsdaten werden von der Eingabeeinrichtung 23 erfaßt und zwischengespeichert in einem Speicher 25. Für den Datenverkehr mit dem Zeigegerät 24 weist die Eingabeeinrichtung 23 eine entsprechende Ansteuereinheit 27 auf, die auf das Datenformat des Zeigegeräts 24 abgestimmt sind. Das Zeigegerät 24 ist in dem dargestellten Ausführungsbeispiel als eine Computer-Maus ausgeführt. Computer-Mäuse haben den Vorteil, daß sie kostengünstig verfügbar sind und die allermeisten Probanden mit ihrer Bedienung bereits vertraut sind. Sie ist intuitiv bedienbar, so daß der Proband praktisch nicht von dem Betrachten des angezeigten Bilds abgelenkt wird. Auf diese Weise können Verfälschungen, die daraus entstehen, daß der Proband sich zu sehr auf das Zeigegerät 24 und seine Bewegung konzentriert, weitestgehend verhindert werden. Wegen dieser vorteilhaften Eigenschaften ermöglicht die Computer-Maus eine besonders einfache, kostengünstige, rückwirkungsarme und damit zuverlässige Messung der von dem Probanden beachteten Bildbereiche. Jedoch ist die Erfindung nicht auf Computer-Mäuse beschränkt. Es können abhängig von den jeweiligen Anforderungen des Bildmaterials, der verwendeten Anzeigeeinrichtung 22 und dem Typus der Probanden auch andere Zeigegeräte 24 verwendet werden, zum Beispiel Lichtgriffel, Touchscreens, Stylos oder Laserpointer (nicht dargestellt). Wichtig ist, daß das Zeigegerät einen Sensor zur Bestimmung der Position des Zeigegeräts aufweist, so daß Positionsdaten in einem zweiten, von der Anzeigeeinrichtung 22 unabhängigen Koordinatensystem erzeugt und an die Steuereinrichtung 24 übermittelt werden. Bei einem Laserpointer kann die Markierung 20 durch den Lichtfleck des Laserstrahls ersetzt sein. Letztere haben sich aufgrund ihres gut wahrnehmbaren Lichtflecks besonders bewährt bei großen Anzeigeeinrichtungen 2. Außerdem sind sie, ähnlich wie Computer-Mäuse, intuitiv bedienbar, da der Zusammenhang zwischen der Bewegung des Laserpointer und dem Resultat, nämlich dem Wandern des Lichtflecks, besonders deutlich ist.

Die Steuereinrichtung 21 umfaßt ferner einen Ereignisdetektor 28. Ereignisse im Sinne der Erfindung sind Vorgänge, bei deren Auftreten bestimmte Aktionen ausgeführt werden. Bei dem Zeigegerät 24 ist eine bestimmte Betätigung das Ereignis. Die Vorgänge, deren Auftreten für das Ereignis bestimmend sind, variieren je nach Einrichtung. Bei der Computer-Maus ist ein Ereignis das Betätigen der Tasten der Maus durch den Probanden. Das Betätigen dieser Tasten wird von dem Ereignisdetektor 28 detektiert. Bei einem anderen Zeigegerät 24 können auch andere Ereignisse detektiert werden, z. B. das Berühren der Bildschirmoberfläche bei einem Touchscreen oder das Unterbrechen der Bewegung mit (annäherndem) Stillstand des Zeigegeräts, während der Proband eine bestimmte Stelle auf der Anzeigeinrichtung 22 betrachtet. Der Ereignisdetektor 28 überwacht nicht nur die Eingabeeinrichtung 23 mit dem Zeigegerät 24, sondern auch weitere Einrichtungen. So wird zum Beispiel die Anzeigeeinrichtung auf das Ereignis "Änderungen des Bildschirminhalts" hin überwacht. Beim Auftreten eines Ereignisses löst der Ereignisdetektor 28 aus und es wird ein Datensatz in eine Datei geschrieben. Der Datensatz umfaßt den Zeitpunkt und die Art des Ereignisses und weitere Angaben, z. B. hinsichtlich der Nummer des Ereignisses und des Bilds, welches zu der Zeit des Ereignisses angezeigt wurde, sowie - im Fall des Zeigegeräts 24 - die übermittelten Positionsdaten. Die nachfolgende Tabelle zeigt ein Beispiel für einige Datensätze der ereignisbasierten Datei:

| Bild-Nr. | Ereignis | Ereignis-Nr. | X-Position | Y-Position | Zeitpunkt |
|---|---|---|---|---|---|
| | | | | | |
| 0 | Bildwechsel | 1007 | -1 | -1 | 0 |
| 0 | Mausklick | 1005 | 0,2 | 0,2 | 114 |
| 0 | Mausbewegung | 1003 | 0,3 | 0,42 | 523 |
| 0 | Mausklick | 1005 | 0,3 | 0,42 | 685 |
| 0 | Mausklick | 1005 | 0,3 | 0,42 | 738 |
| 0 | _{"}Response" | 1004 | -1 | -1 | 932 |
| 1 | Bildwechsel | 1007 | -1 | -1 | 1310 |

Wie man aus der Tabelle erkennt, handelt es sich mit Ausnahme der Bildwechsel sämtlich um Ereignisse, die von dem Probanden hervorgerufen wurden (user-induced events). Das Ereignis "Bildwechsel" wird von der Steuereinrichtung 21 anhand der in dem Film gespeicherten Angaben bestimmt. Das Auftreten der Bildwechsel und deren Zeitpunkte sind damit bekannt. Diese Datensätze sind daher nicht unbedingt erforderlich, sie vereinfachen jedoch später eine Synchronisierung der von dem Probanden hervorgerufenen Ereignisse mit dem Film. Abgesehen von diesen, der Synchronisierung dienenden Datensätzen enthält die ereignisbasierte Datei nur Datensätze von Ereignissen, die von dem Probanden hervorgerufen wurden. Diese Datei ist damit recht klein. Sie kann in einem Textformat abgespeichert sein, insbesondere ASCII oder CSV (comma separated values). Sie eignet sich damit besonders zur Übermittlung über ein Datennetz oder zum Versand per Email.

Bei den in den Datensätzen gespeicherten Positionsdaten handelt es sich nicht um die (rohen) Positionsdaten des jeweils verwendeten Zeigegeräts 24. Sondern die rohen Positionsdaten werden aus dem gerätespezifischen Koordinatensystem in ein geräteunabhängiges Koordinatensystem umgerechnet. Dazu ist die Steuereinrichtung 21 mit einem Umwandelungsmodul 29 versehen. Entsprechendes gilt für das Koordinatensystem der Anzeigeeinrichtung.

Die weitere Verarbeitung geschieht durch das Auswertemodul 3. Dazu werden die Daten aus dem Probandenmodul 2 der Datenabgleicheinrichtung 30 zugeführt. Diese weist mehrere Synchronisiermodule 31-33 auf. Ein erstes und zweites Synchronisiermodul 31, 32 sind zur räumlichen Synchronisation ausgebildet. Das erste Synchronisiermodul 31 dient dazu, das Koordinatensystem des in dem Film enthaltenen Bildmaterials auf ein Koordinatensystem des Auswertemoduls 4 abzubilden. Das zweite Synchronisiermodul 32 dient dazu, die Positionsdaten des Zeigegeräts 24 aus dem geräteunabhängigen Koordinatensystem auf das Koordinatensystem des Auswertemoduls 3 abzubilden. Ein drittes Synchronisiermodul 33 ist zur zeitlichen Synchronisierung ausgebildet. Es dient dazu, unter Verwendung der ereignisbasierten Datei und der Steuerdatei die Daten des Zeigegeräts 24 mit den Bilddaten in zeitlicher Hinsicht zu synchronisieren.

Die auf diese Weise synchronisierten Daten werden dem Auswertemodul 3 zur Verfügung gestellt. Das Auswertemodul 3 ist dazu ausgebildet, die Daten in räumlicher, in zeitlicher, und in räumlich-zeitlicher Hinsicht auszuwerten. Dazu ist das Auswertemodul 3 mit einer Recheneinrichtung 41, einer Eingabeeinrichtung 43 sowie einer Anzeigeeinrichtung 42 versehen. Zur Speicherung der Resultate der Auswertung ist ein Speicher 45 vorgesehen.

Bei der zeitlichen Auswertung können die Daten manuell oder mittels der Recheneinrichtung 41 automatisch analysiert werden. Ein automatisches Analysemodul 411 ist dazu ausgebildet, die Daten anhand von Bildwechseln zu analysieren. Es kann aber auch manuell analysiert werden, hierbei können die jeweiligen Zeitpunkte für die Analyse frei gewählt werden.

Bei der räumlichen Auswertung werden die Bilddaten in Regionen oder einzelne Objekte unterteilt. Dies kann die Recheneinrichtung 41 automatisch mittels geeigneter Bildklassifikationsmodule 412, 413 durchführen oder es kann von einem Benutzer (Auswerter) manuell durchgeführt werden. Die räumliche Auswertung dient dazu, formale oder semantische Objekte oder Regionen, wie Fotos, Text, Animationen etc. zu gruppieren und zu selektieren. Die automatische Bildklassifikation ist dazu ausgebildet, sich allein auf das Ausgangsbild zu stützen oder zusätzlich die ermittelten Zeigedaten bei der Auswertung heranzuziehen. Implementiert sind verschiedene Methoden, nämlich rasterorientiert, wobei ein vordefiniertes Raster über das Bild gelegt wird, mittels eines Parsers, der im Bild enthaltene Informationen über die dargestellten Objekte interpretiert (bei html-Dokumenten in Gestalt des Document Object Model), oder schließlich mittels herkömmlicher Bilderkennungsmethoden. Die vorstehend genannten Methoden können jeweils für sich oder in Kombination miteinander angewendet werden. Häufig wird dennoch eine manuelle Nachbearbeitung erforderlich sein.

Die mit der räumlichen Auswertung gewonnenen Resultate können auf graphische Weise oder in Form von Daten ausgegeben werden. Die graphische Ausgabe kann insbesondere in Form von sog. Heatmaps erfolgen. Heatmaps basieren auf einer gerasterten Darstellung des zu untersuchenden Bilds mit zusätzlichen Elementen zur Hervorhebung bestimmter Bereiche. Sie dienen dazu, die örtliche Verteilung der gemessenen Positionsdaten darzustellen. Dies geschieht in der Regel durch Farbmarkierungen, indem besonders beachtete Bereiche mit einer bestimmten Farbe (z. B. rot) gekennzeichnet und damit hervorgehoben werden. Bei Verwendung der Farbe Rot zur Kennzeichnung erhalten die besonders beachteten Bereiche eine rötliche Einfärbung, sie erscheinen rotglühend. Daher leitet sich der Name Heatmap ab. Zur Berechnung der Heatmaps führt die Recheneinrichtung 41 drei Schritte durch: Berechnung eines zweidimensionalen Histogramms der Positionsdaten über die Bildebene (eingeteilt in _{"}bins"), Berechnen der Summe der Histogramme der benachbarten "bins" und zum Ausgeben für jeden "bin" Normieren sowie Hinzuaddieren der gewichteten Summe der benachbarten "bins". Das Ergebnis ist ein skalarer Wert, dem über eine Tabelle eine bestimmte Farbe und/oder Transparenz zugewiesen wird. Bei der datenbasierten Analyse wird das untersuchte Bild in Regionen aufgeteilt. Für jede Region werden dann basierend auf den Positionsdaten Aufmerksamkeits-Werte berechnet, die zweckmäßigerweise bezüglich der Größe der Regionen normalisiert werden. Daraus läßt sich ablesen, wie die Aufmerksamkeit auf die einzelnen Regionen verteilt ist. Weitere Erkenntnisse vermitteln eine Betrachtung über die Zeit, die nachfolgend erläutert wird.

Bei der kombinierten räumlich-zeitlichen Auswertung können folgende Methoden verwendet werden: Erzeugen eines "Heatmovie", Durchführen von String-Analysen oder von Markov-Analysen oder Durchführen von Sequenz-Analysen. Bei einem _{"}Heatmovie" handelt es sich um animierte Heatmaps. Das Heatmovie kann auf einem Zeit-Maßstab oder auf einem Bildwechsel-Maßstab basieren. Letzteres erfordert zwingend mehrere Bilder, während mit dem Zeit-Maßstab auch für ein Bild ein Heatmovie erstellt werden kann. Dazu wird die Zeitachse in gleiche Abschnitte unterteilt und für jeden Abschnitt eine eigene Sub-Heatmap berechnet. Bei einer "String-Analyse" werden Regelmäßigkeiten im zeitlichen Ablauf der Eingabedaten gesucht und angezeigt. String-Analysen beziehen sich auf die bereits erwähnten Regionen. Für jede Region wird ein Buchstabe vergeben. Es wird bestimmt, in welcher Reihenfolge die Regionen betrachtet wurden. Es ergibt sich somit eine Sequenz von Buchstaben. Auf diese Weise läßt sich leicht ermitteln, welche Regionen am Anfang einer Bildrepräsentation und welche Regionen am Schluß beachtet werden. Die Regionen-Analyse eignet sich daher besonders zur Analyse der dynamischen Aufmerksamkeitsverteilung über die Zeit. Bei einer _{"}Markov-Analyse" werden Wechsel von einer Region zu einer anderen bewertet. Dazu wird die Wahrscheinlichkeit eines Übergangs von einer Region auf die nachfolgende Region bewertet. Es ergeben sich Wahrscheinlichkeits-Matrizen, die mit verschiedenen aus der Informationstheorie bekannten Methoden ausgewertet werden können. So kann die räumliche Varianz von Sequenzen bestimmt werden. Damit können typische Übergänge zwischen Regionen erkannt werden. Es kann damit z. B. bestimmt werden, welche Regionen unabhängig vom Ausgangspunkt die Aufmerksamkeit auf sich ziehen oder welche Regionen sozusagen beharrlich ignoriert werden. Bei einer "Sequenz-Analyse' wird nach typischen Regionenfolgen gesucht.

Falls das Bildmaterial von mehreren Probanden betrachtet worden ist, können die vorstehend erläuterten Auswertungen auf jeden Probanden einzeln angewendet werden oder es können Durchschnitte über mehrere oder alle Probanden gebildet werden, was zielgruppenspezifische Auswertungen gemäß den Anforderungen von Marktforschungsstudien ermöglicht.

Die Ergebnisse der Auswertung werden auf der Anzeigeeinrichtung 42 angezeigt und in der Speichereinrichtung 45 als eine Ergebnisdatei gespeichert. Um die Ergebnisse auch extern verwenden zu können, beispielsweise zur weiteren Auswertung, ist eine Exporteinrichtung 49 vorgesehen. Sie greift auf die Recheneinrichtung 41 und die Speichereinrichtung 45 zu und übermittelt die Ergebnisdatei. Auf diese Weise können berechnete Visualisierungen, Datenergebnisse oder auch Rohdaten exportiert werden. Als Formate für den Export können Excel-Tabellen, Textdateien (insbesondere als CSV-Datei) und diverse Grafikformate, wie jpg, gif, tif, mpeg oder avi, verwendet werden.

Falls die Auswertung unter Berücksichtigung von Zeitdruck für die Probanden erfolgen soll, ist vorzugsweise das Probandenmodul 2 mit Zeitmeß- und ggf. auch Zeitanzeigeeinrichtungen (nicht dargestellt) versehen. Auf diese Weise kann der Faktor Zeit in die Beurteilung besser und kontrollierter einbezogen werden.

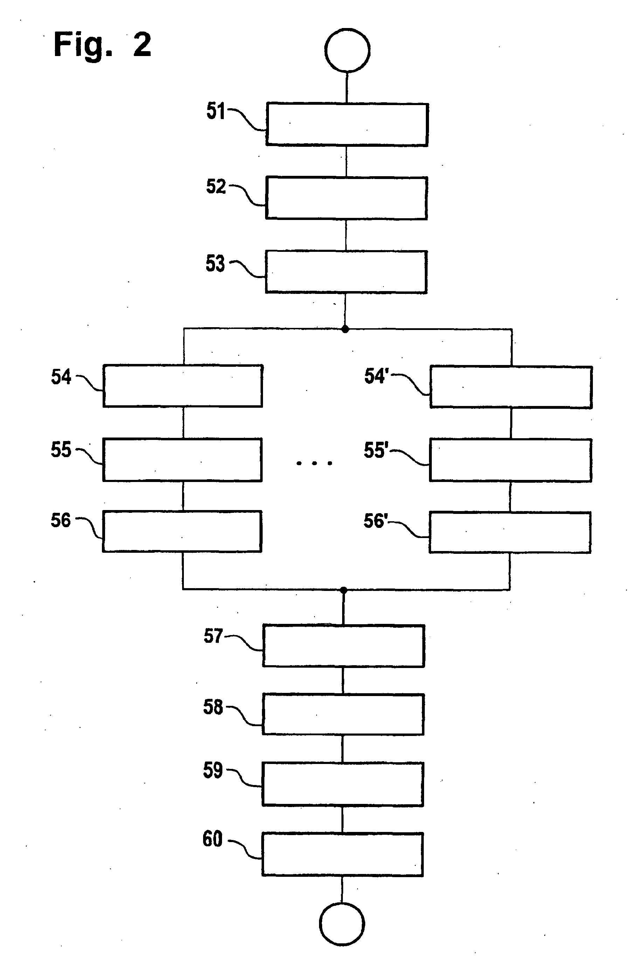

Das erfindungsgemäße Verfahren läuft kurzgefaßt wie nachfolgend unter Bezugnahme auf Fig. 2 beschrieben ab.

In einem ersten Schritt 51 werden die Bilddaten der zu untersuchenden Bilder geladen. Quellen für die Bilddaten sind die Kamera 12 und die Anzeigeeinrichtung 13. Basierend auf diesen Bilddaten wird in einem zweiten Schritt 52 mittels der Auswahleinrichtung 11 eine Bildfolge festgelegt und weitere Steuerinformationen, z. B. über Zeitdauer und Bildwechsel, erzeugt. Mittels des Transkodiermoduls 14 wird dann der Film erzeugt und schließlich in einem dritten Schritt 53 in der Speichereinrichtung 10 abgespeichert.

Für den nächsten Schritt 54 der Ausgabe der in dem Film festgelegten Bildfolgen werden zunächst die Filmdaten über die Netzwerkleitung 29 von dem Testdesignmodul 1 an das Probandenmodul 2 übertragen. Mittels der Steuereinrichtung 21 werden dann in einem Schritt 54 die Bilder in der im Film festgelegten Folge auf der Anzeigeeinrichtung 22 dem Probanden dargestellt. Danach oder dabei bewegt der Proband das Zeigegerät 24. So werden Positionsdaten erzeugt, welche den Ort und den Verlauf seines Aufmerksamkeitspunkts auf dem dargestellten Bild wiedergeben. Nachfolgend werden in einem Schritt 55 die Positionsdaten über die Eingabeeinrichtung 23 in die Steuereinrichtung 21 eingelesen und dabei wird mittels der Steuereinrichtung 21 interaktiv die Markierung 20 auf der Anzeigeeinrichtung 22 entsprechend den eingelesenen Positionsdaten bewegt dargestellt. In einem nachfolgenden Schritt 56 verarbeitet der Ereignisdetektor 28 die Daten von dem Zeigegerät 24 und erzeugt so die ereignisbasierte Datei. Es braucht nicht nur ein Probandenmodul 2 vorgesehen zu sein, sondern es können auch ein zweites und weitere Probandenmodule vorgesehen sein. In diesen laufen dieselben Schritte (54' - 56') ab wie in dem ersten Probandenmodul 2. Jedoch müssen diese Schritte nicht notwendig in allen Probandenmodulen zur selben Zeit erfolgen. Dies kann zwar so sein, ist aber nicht erforderlich. Das ist gerade einer der Vorteile der Erfindung, daß zwar auf einfache Weise mehrere Probanden zur Untersuchung herangezogen werden können, daß sie jedoch weder räumlich noch zeitlich vereinigt zu sein brauchen.

Für die nachfolgenden Schritte werden die ermittelten Positionsdaten über die Netzwerkleitung 39 an die Datenabgleichseinrichtung 30 übertragen, in einem Schritt 57 gesichert und danach in einem Schritt 58 übertragen und von der Recheneinrichtung 41 des Auswertemoduls 3 ausgewertet, und zwar nach den Maßgaben des dortigen Benutzers. Schließlich werden in einem Schritt 59 die beim Auswerten gewonnen Resultate auf der Anzeigeeinrichtung 42 des Auswertemoduls 3 dargestellt. Zusätzlich werden die Resultate abgespeichert und für den Export über eine entsprechende Exporteinrichtung 49 bereit gestellt; dies geschieht in einem Schritt 60.

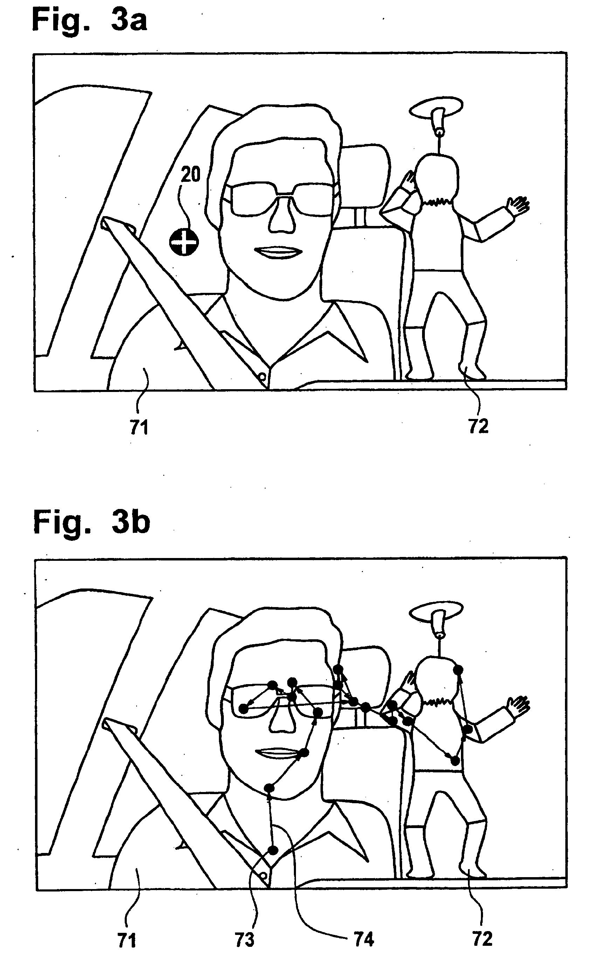

Ein Beispiel für ein Resultat nach der Auswertung ist in Fig. 3 dargestellt. In dem oberen Bild (Fig. 3a) ist gezeigt, wie sich die Anzeigeeinrichtung 22 dem Probanden bei der Untersuchung darstellt. Man erkennt auf der Abbildung eine Person 71, die im Auto sitzend dargestellt ist und von der nur ein Teil des Oberkörpers sichtbar ist. Man erkennt ferner eine gelenkige Puppe 72, die an der Frontscheibe des Autos aufgehängt ist und sich mit ihren Füßen auf dem Armaturenbrett des Autos abstützt. Ferner dargestellt ist die Markierung 20, deren Position von dem Probanden beim Betrachten des Films durch Bewegen des Zeigegeräts manuell verändert werden kann. In dem unteren Bild (Fig. 3b) ist dargestellt, welchen Verlauf die Aufmerksamkeitspunkte des Probanden bei dem Betrachten dieses Bild genommen haben. Zusätzlich sind in dieser Figur noch die einzelnen Aufmerksamkeitspunkte 73 eingezeichnet. Da das Auge dazu neigt, nahezu diskontinuierlich von einem Punkt zu dem nächsten zu springen, sind zur besseren Übersicht die einzelnen Aufmerksamkeitspunkte 73 in chronologischer Reihenfolge durch Pfeile 74 verbunden. Man erkennt in Fig. 3b deutlich, wie der Blick des Probanden von unten an der Person 71 nach oben zur Brille gewandert ist, diese über nahezu die gesamte Breite erkundete und dann schließlich zu der gelenkigen Puppe 72 hinüber gewechselt ist und diese anschließend näher betrachtet worden ist.

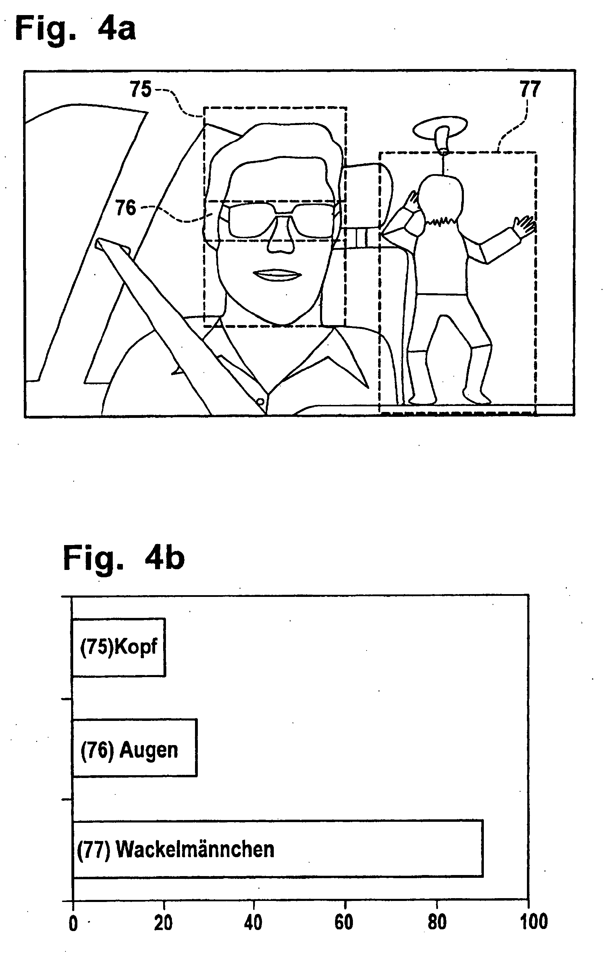

In Fig. 4 ist ein Resultat für die räumliche Auswertung dargestellt. In Fig. 4a ist die Abbildung von Fig. 3a dargestellt, nachdem sie mittels der Bildklassifikationsmodule 412, 413 verarbeitet worden ist. Bei der räumlichen Auswertung der Abbildung sind drei Regionen klassifiziert worden, eine Region "Kopf" 75 und eine Region "Augen" 76, die den Kopf bzw. die Augen mit der Brille der Person 71 umranden, sowie eine Region "Wackelmännchen" 77, die die gelenkige Puppe 72 umgibt.

In Fig. 4b ist dargestellt, mit welcher Häufigkeit eine Probandengruppe die jeweiligen Regionen betrachtet hat. Für die drei Regionen "Kopf" 75, "Augen" 76 und "Wackelmännchen" 77 ist die jeweils ermittelte Betrachtungshäufigkeit eingezeichnet. Sie ist ein Maß dafür, welchen Teil ihrer Aufmerksamkeit die Probanden den jeweiligen Regionen geschenkt haben. Man erkennt, daß der Region "Wackelmännchen" 77 am meisten Aufmerksamkeit zuteil worden ist.

Bei einer kombinierten räumlich-zeitlichen Auswertung können dann an Stelle einer Säule eine Mehrzahl von hintereinander gestaffelten Säulen in Fig. 4b dargestellt sein. Jede der hintereinander gestaffelten Säulen steht dabei für einen bestimmten Zeitpunkt. Auf diese Weise läßt sich erkennen, welche Region zu welchem Zeitpunkt in welchem Umfang beachtet worden ist. Auf diese Weise lassen sich Aufmerksamkeits-Verläufe ermitteln. Dies ist eine zur Bewertung von Bildmaterial besonders wertvolle Funktion. Beispielsweise kann in dem zu untersuchenden Bildmaterial eine Marke enthalten sein, die für ein Unternehmen steht, das mit dem zu untersuchenden Bildmaterial beispielsweise Werbung zu machen gedenkt. Es kann dann untersucht werden, ob die Region mit der Marke diejenige Region ist, die am Schluß der Betrachtung die Aufmerksamkeit auf sich gezogen hat und dadurch eine hohe Wahrscheinlichkeit dafür besteht, daß die Marke noch einige Zeit im Gedächtnis des Betrachters "nachwirkt". Derartige Verläufe können durch eine räumlich-zeitliche Auswertung ermittelt werden.

Es versteht sich, daß das Bildmaterial auch auf andere Weise, z. B. mittels Heatmaps, ausgewertet und präsentiert werden kann.

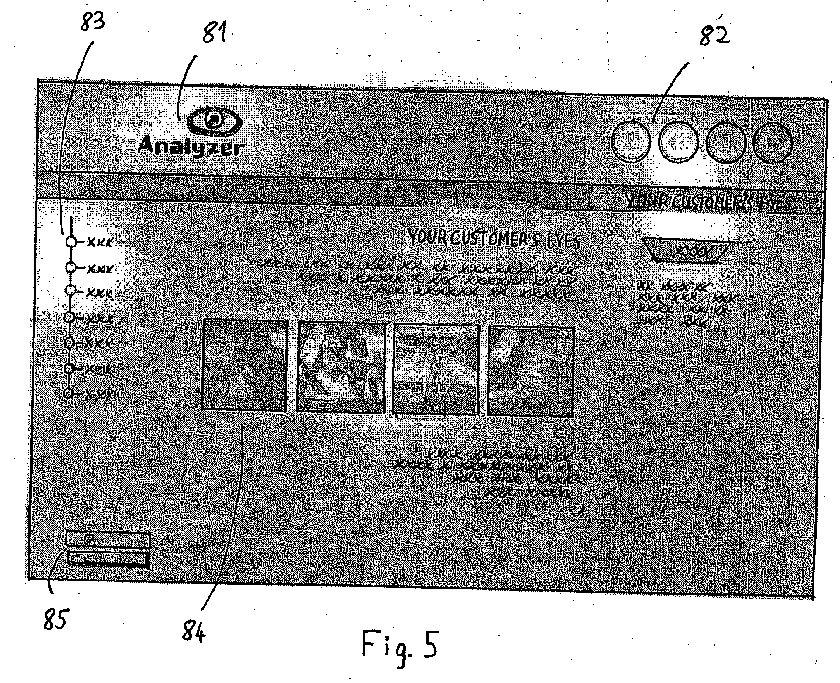

Ein Beispiel für eine Heatmap ist in Fig. 5 dargestellt. Dort ist das Ergebnis einer Auswertung dargestellt, bei der das zu untersuchende Bildmaterial eine Webseite ist. Die Webseite weist als wesentliche Bestandteile eine Abbildung des Firmenlogos mit Angabe des Firmennamens 81, eine grafische Darstellung von Schaltflächen 82 zum Navigieren auf der Webseite, eine baumartige Übersichtsdarstellung über den Inhalt der Webseite 83 sowie eine Anordnung mehrerer Abbildungen 8 etwa in der Mitte der Webseite und im Bereich links unten eine Kontaktmöglichkeit für elektronische Post 85 auf. Es wurde untersucht, welche dieser Bereiche die Aufmerksamkeit der Betrachter besonders auf sich ziehen. Das Ergebnis der Untersuchung ist durch eine unterschiedliche Helligkeit dargestellt. Hell eingefärbt sind die Bereiche 81 bis 84. Das bedeutet, daß diese Bereiche von den Betrachtern aufmerksamer betrachtet worden sind als der Rest der Webseite, z. B. der Bereich 85. Der unterschiedliche Grad der Helligkeit ist ein Maß dafür, mit welcher Häufigkeit die jeweiligen Bereiche betrachtet worden sind. Zum Beispiel ist zu erkennen, daß der Bereich 82 heller eingefärbt ist und ihm damit mehr Aufmerksamkeit zuteil wurde als dem Bereich 81. Anders ausgedrückt bedeutet dies, daß die Schaltflächen über die Navigation auf der Webseite eine größere Aufmerksamkeit hervorgerufen haben als die Angabe des Firmennamens mit dem Logo. Wenn es z. B. das Ziel der Webseite ist, daß die Betrachter besonders viel Aufmerksamkeit dem Firmennamen zuwenden, so erkennt man, daß dieses Ziel bei dem jetzigen Aufbau der Webseite noch nicht erreicht worden ist. Es können dann Umgestaltungen der Webseite vorgenommen werden und die umgestaltete Webseite wiederum mit dem erfindungsgemäßen Verfahren bewertet werden. Auf diese Weise kann man schließlich zu einer Gestaltung gelangen, welche die gestellten Anforderungen in optimaler Weise erfüllt.

## Patentansprüche

1. Vorrichtung zum Untersuchen von Bildern umfassend grafische und/oder Text-Inhalte mit einer Bildspeichereinrichtung (10), die zum Speichern von Bilddaten eines oder mehrerer auszuwertender Bilder ausgebildet ist,
einer Anzeigeeinrichtung (22), die zum Darstellen der Bilddaten ausgebildet ist,
einer Eingabeeinrichtung (23) für einen Probanden, die ein Zeigegerät (24) aufweist, wobei das Zeigegerät (24) so ausgebildet ist, daß es von dem Probanden manuell zum Zeigen bewegt wird, und die Eingabeeinrichtung (23) interaktiv mit einer Markierung (20) derart zusammenwirkt, daß die Position des Zeigegeräts (24) mittels der Markierung (20) auf der Anzeigeeinrichtung (22) dargestellt wird,
einer Steuereinrichtung (24), welche die vorgenannten Einrichtungen miteinander verbindet und mittels einer Steuerdatei eine Darstellung der zu untersuchenden Bilder als eine in Reihenfolge und Zeit bestimmte Bildfolge auf der Anzeigeeinrichtung (22) bewirkt,
einem Ereignisdetektor (28), der dazu ausgebildet ist, die Positionsdaten bei Auftreten eines bestimmten Ereignisses zu erfassen und eine Ereignisdatei zu bilden,
einer Datenabgleicheinrichtung (30) zum Abgleichen von Bilddaten und Betrachtungsdaten sowie
**dadurch gekennzeichnet, daß**
der Ereignisdetektor (28) weiter so ausgebildet ist, dass für einen Bildwechsel ein eigener Datensatz erzeugt und ein Nullzeitpunkt bestimmt wird, wobei die Ereignisdatei gebildet ist aus Datensätzen, die Daten zum Zeitpunkt, zur Position und zum Bild umfassen,
die Datenabgleicheinrichtung (30) ein Synchronisiermodul (33) aufweist, das die Steuerdatei mit der Ereignisdatei synchronisiert, und
eine Zeitmesseinrichtung vorgesehen ist, die mit einer Auswerteeinrichtung (41) zusammenwirkt, welche ausgebildet ist zum Errechnen eines zeitabhängigen. Betrachtungsverlaufs aus Datensätzen und Bestimmung der Häufigkeit der Ereignisse, die der Ereignisdetektor als Betätigen einer Taste des Zeigegeräts(24) ermittelt hat, über der Zeit, und die Auswerteeinrichtung (41) weiter ein Bildklassifikationsmodul (412,413) aufweist, das so ausgebildet ist, um die Bilddaten automatisch gestützt auf das Ausgangsbild unter Berücksichtigung der vom Zeigegerät (24) gewonnenen Daten in Objekte zu klassifizieren.

2. Vorrichtung nach Anspruch 1, **dadurch gekennzeichnet, daß** das Zeigegerät (24) eine Computer-Maus ist.

3. Vorrichtung nach Anspruch 1, **dadurch gekennzeichnet, daß** das Zeigegerät (24) ein Lichtzeiger oder ein Lichtgriffel ist.

4. Vorrichtung nach einem der vorhergehenden Ansprüche, **dadurch gekennzeichnet, daß** mehrere Eingabeeinrichtungen (23) mit Zeigegeräten (24) vorgesehen sind.

5. Vorrichtung nach einem der vorhergehenden Ansprüche, **dadurch gekennzeichnet, daß** die Eingabeeinrichtung (23) mit dem Zeigegerät (24) räumlich getrennt von einem Auswertemodul (3) angeordnet ist und damit über ein Datennetz, insbesondere ein LAN oder ein WAN, verbunden sind.

6. Vorrichtung nach einem der vorhergehenden Ansprüche, **dadurch gekennzeichnet, daß** der Ereignisdetektor (28) so ausgebildet ist, daß das bestimmte Ereignis das Ruhen des Zeigegeräts (24) ist.

7. Vorrichtung nach einem der vorhergehenden Ansprüche, **dadurch gekennzeichnet, daß** ein Umwandelungsmodul (29) zum Transformieren von Positionsdaten aus einem gerätespezifischen Koordinatensystem in ein geräteunabhängiges Koordinatensystem vorgesehen ist.

8. Verfahren zum Untersuchen von Bildern mit den Schritten:
- Speichern (53) von Bilddaten eines oder mehrerer zu untersuchender Bilder umfassend grafische und/oder Text-Inhalte in einer Speichereinrichtung,
- Anzeigen (55) durch Darstellen der zu untersuchenden Bilder als eine in Reihenfolge und Zeit bestimmte Bildfolge auf der Anzeigeeinrichtung (22) gemäß einer Steuerdatei,
- Bestimmen einer Position aus Daten einer Eingabeeinrichtung (23) mittels Abfragen von Positionsdaten eines von einem Probanden manuell bewegten Zeigegeräts (24) und interaktivem Anzeigen einer Markierung (20) für die Position des Zeigegeräts (24),
- Abfragen eines Ereignisdetektors (28) für das Betätigen des Zeigegeräts (24) und Bilden einer Ereignisdatei,
**gekennzeichnet, durch**
- Erzeugen eines eigenen Datensatzes für einen Bildwechsel und Bestimmen eines Nullzeitpunkts, Speichern (56) der Positionsdaten beim Betätigen des Zeigegeräts (24) in einer ereignisbasierten Datei, wobei die Ereignisdatei gebildet wird aus Datensätzen, die Daten zum Zeitpunkt, zur Position und zum Bild umfassen,
- Verarbeiten von ereignisbedingten Zusatzinformationen zur Bestimmung der Häufigkeit der Ereignisse in Gestalt einer Tastenbetätigung des Zeigegeräts (24),
- Auswerten (58) **durch** Synchronisieren der Steuerdatei und der Ereignisdatei zum Berechnen eines zeitabhängigen Betrachtungsverlaufs (73, 74) unter Berücksichtigung der Häufigkeit über der Zeit, und
- das Auswerten weiter eine Bildklassifikation umfasst, um die Bilddaten automatisch gestützt auf das Ausgangsbild unter Berücksichtigung der vom Zeigegerät (24) gewonnenen Daten in Objekte zu klassifizieren.

9. Verfahren nach Anspruch 8, **dadurch gekennzeichnet, daß** der Ereignisdetektor (28) die Bewegung des Zeigegeräts (24) überwacht und auslöst, wenn das Zeigegerät (24) zur Ruhe kommt.

10. Verfahren nach Anspruch 8 oder 9, **dadurch gekennzeichnet, daß** als das Zeigegerät (24) eine Computer-Maus verwendet wird.

11. Verfahren nach einem der Ansprüche 8 bis 9, **dadurch gekennzeichnet, daß** als das Zeigegerät (24) ein Lichtzeiger oder ein Lichtgriffel verwendet wird.

12. Verfahren nach einem der Ansprüche 8 bis 11, **dadurch gekennzeichnet, daß** die Eingabeeinrichtung (23) mit dem Zeigegerät (24) die Positionsdaten über ein Datennetz, insbesondere ein LAN oder WAN, an ein Auswertemodul (3) übermittelt.

13. Computerprogrammprodukt zur Durchführung des Verfahrens nach einem der Ansprüche 8 bis 12.

## Claims

1. Apparatus for examination of images comprising graphical and/or text contents having an image storage device (10) which is designed to store image data for one or more images to be evaluated,
a display device (22) which is designed to display the image data,
an input device (23) for a subject, which has a pointing appliance (24), with the pointing appliance (24) being designed such that it is moved manually by the subject for pointing, and the input device (23) interacting interactively with a marking (20) such that the position of the pointing appliance (24) is displayed by means of the marking (20) on the display device (22),
a control device (24) which connects the abovementioned devices to one another and, by means of a control file, brings about a display of the images to be examined as an image sequence determined in terms of order and time on the display device (22),
an event detector (28), which is designed to record the position data when a specific event occurs and to form an event file,
a data matching device (30) for matching image data and visualization data, as well as
**characterized in that**
the event detector (28) is furthermore designed such that for an image change a dedicated data record is generated and a zero instant is determined, wherein the event file is formed from data records comprising data concerning the instant, concerning the position and concerning the image,
the data matching device (30) has a synchronization module (33) which synchronizes the control file with the event file, and
a time measuring device is provided, which interacts with an evaluation device (41), which is designed for the calculation of a time-dependent visualization profile from data records and determination of the frequency of the events, determined by the event detector as actuation of a button of the pointing appliance (24), over time, and the evaluation device (41) furthermore has an image classification module (412, 413), which is designed to classify the image data into objects automatically on the basis of the output image taking account of the data obtained by the pointing appliance (24).

2. Apparatus according to Claim 1, **characterized in that** the pointing appliance (24) is a computer mouse.

3. Apparatus according to Claim 1, **characterized in that** the pointing appliance (24) is a light pointer or a light pen.

4. Apparatus according to one of the preceding claims, **characterized in that** two or more input devices (23) with pointing appliances (24) are provided.

5. Apparatus according to one of the preceding claims, **characterized in that** the input device (23) together with the pointing appliances (24) is arranged physically separately from an evaluation module (3), and is connected to it via a data network, in particular a LAN or a WAN.

6. Apparatus according to one of the preceding claims, **characterized in that** the event detector (28) is designed such that the specific event is the pointing appliance (24) being at rest.

7. Apparatus according to one of the preceding claims, **characterized in that** a conversion module (29) is provided for transformation of position data from an appliance-specific coordinate system to an appliance-independent coordinate system.

8. Method for examination of images, having the following steps:
- storage (53) of image data for one or a plurality of images to be examined comprising graphical and/or text contents, in a memory device,
- display (55) by means of the images to be examined being displayed as an image sequence determined in terms of order and time on the display device (22) in accordance with a control file,
- determination of a position from data from an input device (23) by means of interrogation of position data from a pointing appliance (24) which is moved manually by a subject, and interactive display of a marking (20) for the position of the pointing appliance (24),
- interrogation of an event detector (28) for actuation of the pointing appliance (24) and formation of an event file,
**characterized by**
- generation of a dedicated data record for an image change and determination of a zero instant, storage (56) of the position data upon actuation of the pointing appliance (24) in an event-based file, wherein the event file is formed from data records comprising data concerning the instant, concerning the position and concerning the image,
- processing of event-dictated supplementary information for determining the frequency of the events in the form of button actuation of the pointing appliance (24),
- evaluation (58) by synchronization of the control file and the event file for the calculation of a time-dependent visualization profile (73, 74) taking account of the frequency over time, and
- the evaluation furthermore comprises an image classification in order to classify the image data into objects automatically on the basis of the output image taking account of the data obtained by the pointing appliance (24).

9. Method according to Claim 8, **characterized in that** the event detector (28) monitors the movements of the pointing appliance (24) and is triggered when the pointing appliance (24) comes to rest.

10. Method according to Claim 8 or 9, **characterized in that** a computer mouse is used as the pointing appliance (24).

11. Method according to either of Claims 8 and 9, **characterized in that** a light pointer or a light pen is used as the pointing appliance (24).

12. Method according to one of Claims 8 to 11, **characterized in that** the input device (23) together with the pointing appliance (24) transmits the position data via a data network, in particular a LAN or WAN, to an evaluation module (3).

13. Computer program product for carrying out the method according to one of Claims 8 to 12.

## Revendications

1. Dispositif d'examen d'images comprenant des contenus graphiques et/ou des textes avec un dispositif d'enregistrement d'images (10) conçue pour l'enregistrement de données d'images d'une ou plusieurs images à analyser,
un dispositif d'affichage (22) conçu pour l'affichage des données d'images,
un dispositif d'entrée (23) pour un testeur, qui comprend un appareil de pointage (24), cet appareil de pointage (24) étant conçu de façon à être déplacé par le testeur manuellement à des fins de pointage et le dispositif d'entrée (23) interagit de manière interactive avec un repère (20) de façon à ce que la position de l'appareil de pointage (24) soit affichée à l'aide du repère (20) sur le dispositif d'affichage (22),
un dispositif de commande (24), qui relie entre eux les dispositifs mentionnés ci-dessus et qui provoque, à l'aide d'un fichier de commande, un affichage des images à examiner sous la forme d'une suite d'images ordonnée et chronologique, sur le dispositif d'affichage (22),
un détecteur d'événement (28) conçu pour déterminer les données de position lors de l'apparition d'un événement déterminé et de créer un fichier d'événement,
un dispositif de comparaison de données (30) pour la comparaison de données d'images et de données d'observation ainsi que
**caractérisé en ce que**
le détecteur d'événements (28) est en outre conçu de façon à ce que, pour un changement d'image, son propre jeu de données soit créé et un moment zéro défini, le fichier d'événement étant constitué de jeux de données qui comprennent des données concernant le moment, la position et l'image,
le dispositif de comparaison de données (30) comprenant un module de synchronisation (33) qui synchronise le fichier de commande avec le fichier d'événement, et
un dispositif de mesure du temps est prévu, qui interagit avec un dispositif d'analyse (41), conçu pour calculer un tracé d'observation en fonction du temps à partir de jeux de données et pour déterminer la fréquence des événements que le détecteur d'événements a déterminé comme un actionnement d'une touche de l'appareil de pointage (24), en fonction du temps, et le dispositif d'analyse (41) comprend en outre un module de classification d'images (412, 413) conçu de façon à classifier les données d'images automatiquement en fonction de l'image de départ en tenant compte des données obtenues par l'appareil de pointage (24) dans des objets.

2. Dispositif selon la revendication 1, **caractérisé en ce que** l'appareil de pointage (24) est une souris d'ordinateur.

3. Dispositif selon la revendication 1, **caractérisé en ce que** l'appareil de pointage (24) est un pointeur lumineux ou un crayon lumineux.

4. Dispositif selon l'une des revendications précédentes, **caractérisé en ce que** plusieurs dispositifs d'entrée (23) avec des appareils de pointage (24) sont prévus.

5. Dispositif selon l'une des revendications précédentes, **caractérisé en ce que** le dispositif d'entrée (23) avec l'appareil de pointage (24) est disposé séparément d'un module d'analyse (3) et ils sont reliés par l'intermédiaire d'un réseau de données, plus particulièrement d'un LAN ou d'un WAN.

6. Dispositif selon l'une des revendications précédentes, **caractérisé en ce que** le détecteur d'événement (28) est conçu de façon à ce que l'événement déterminé est le repos de l'appareil de pointage (24).

7. Dispositif selon l'une des revendications précédentes, **caractérisé en ce qu'**un module de conversion (29) est prévu pour la transformation des données de position d'un système de coordonnées spécifique à l'appareil en un système de coordonnées indépendant de l'appareil.

8. Procédé d'examen d'images avec les étapes suivantes :
- enregistrement (53) de données d'images d'une ou plusieurs images à examiner comprenant des contenus graphiques et/ou des textes dans un dispositif d'enregistrement,
- affichage (55) par représentation des images à examiner comme une série d'images ordonnée et chronologique sur le dispositif d'affichage (22), selon un fichier de commande,
- détermination d'une position à partir de données d'un dispositif d'entrée (23) à l'aide d'une interrogation de données de position d'un appareil de pointage (24) déplacé manuellement par un testeur et affichage interactif d'un repère (20) pour la position de l'appareil de pointage (24),
- interrogation d'un détecteur d'événement (28) pour l'actionnement de l'appareil de pointage (24) et la création d'un fichier d'événement,
**caractérisé par**
- la création d'un jeu de données pour un changement d'image et détermination d'un moment zéro, enregistrement (56) des données de position lors de l'actionnement de l'appareil de pointage (24) dans un fichier basé sur les événements, le fichier d'événement étant constitué de jeux de données comprenant les données concernant le moment, la position et l'image,
- le traitement d'informations supplémentaires basées sur les événements pour la détermination de la fréquence des événements sous la forme d'un actionnement de touche de l'appareil de pointage (24),
- l'analyse (58) par la synchronisation du fichier de commande et du fichier d'événement pour le calcul d'un tracé d'observation en fonction du temps (73, 74) en tenant compte de la fréquence en fonction du temps, et
- l'analyse comprend en outre une classification d'images pour classifier les données d'images automatiquement sur la base de l'image de départ en tenant compte des données obtenues par l'appareil de pointage (24) dans les objets.

9. Procédé selon la revendication 8, **caractérisé en ce que** le détecteur d'événement (28) surveille et déclenche le déplacement de l'appareil de pointage (24) lorsque l'appareil de pointage (24) est au repos.

10. Procédé selon la revendication 8 ou 9, **caractérisé en ce qu'**une souris d'ordinateur est utilisée comme appareil de pointage (24).

11. Procédé selon la revendication 8 ou 9, **caractérisé en ce qu'**un pointeur ou un crayon lumineux est utilisé comme appareil de pointage (24).

12. Procédé selon l'une des revendications 8 à 11, **caractérisé en ce que** le dispositif d'entrée (23) avec l'appareil de pointage (24) transmet les données de position par l'intermédiaire d'un réseau de données, plus particulièrement un LAN ou un WAN, à un module d' analyse (3).

13. Produit de type programme informatique pour la réalisation du procédé selon l'une des revendications 8 à 12.
